# EUROPEAN PATENT SPECIFICATION

(11) **EP 4 542 938 B1**
(45) Date of publication and mention of the grant of the patent: **05.08.2026**
(21) Application number: 23204207.7
(22) Date of filing: 17.10.2023
(51) Int. Cl.: H04L 12/413

(54) **A RECONCILIATION MODULE AND ASSOCIATED METHOD FOR COLLISION AVOIDANCE**
ABGLEICHMODUL UND ZUGEHÖRIGES VERFAHREN ZUR KOLLISIONSVERMEIDUNG
MODULE DE RAPPROCHEMENT ET PROCÉDÉ ASSOCIÉ POUR ÉVITER DES COLLISIONS

(43) Date of publication of application: 23.04.2025
(73) Proprietor: NXP B.V., 5656 AG Eindhoven (NL)
(72) Inventor: DEN BESTEN,, Gerrit Willem, 5656 AG Eindhoven (NL); AXER,, Philip, 5656 AG Eindoven (NL)
(74) Representative: Schmütz, Christian Klaus Johannes

(56) References cited:
- US-A1- 2020 351 119
- US-A1- 2021 058 224
- US-A1- 2023 092 814

## Description

### Field

The present disclosure relates to multidrop bus networks, and in particular concerns an apparatus and associated method of collision avoidance for a node of a multidrop bus network.

### Backaround

Collisions on the bus of a multidrop bus network can cause a decrease in bus efficiency and throughput. The apparatus and associated method described herein may address this issue.

US 2023/0092814 (A1) discloses an apparatus that includes a reconciliation sublayer of a physical layer, a reduced media independent interface (RMII) of the physical layer, and a logic circuit.

### Summary

The invention is defined in the appended claims. According to a first aspect of the present disclosure, there is provided a reconciliation module for a node of a multidrop bus network, the node comprising a MAC module and a PHY module, the reconciliation module comprising circuitry configured to:
receive data from the MAC module for transmission on the multidrop bus network via the PHY module at a transmit opportunity of the node;
assert a sense signal on receipt of the data from the MAC module; and
delay de-assertion of the sense signal after transmission of the data to facilitate the transmission of further data at the next transmit opportunity of the node.

In one or more embodiments, the reconciliation module may be configured to delay de-assertion of the sense signal until a predefined wait time of the MAC module in advance of the next transmit opportunity of the node in the absence of intervening transmissions from the other nodes of the multidrop bus network.

In one or more embodiments, in the event of an intervening transmission from another node of the multidrop bus network after transmission of the data, the reconciliation module may be configured to delay de-assertion of the sense signal after the intervening transmission until the predefined wait time in advance of the next transmit opportunity. This assumes that the time between the end of the intervening transmission and the start of the next transmit opportunity is longer than the wait time, otherwise it would not be possible to utilise the next transmit opportunity.

In one or more embodiments, in the event of an intervening transmission from another node of the multidrop bus network after transmission of the data, the reconciliation module may be configured to:
de-assert the sense signal;
receive the further data from the MAC module;
assert a collision signal on receipt of the further data from the MAC module to stop the MAC module from continuing to send the further data; and
control the sense signal to cause the MAC module to resend the further data as part of a re-transmission attempt such that the further data is transmitted at the next transmit opportunity of the node.

In one or more embodiments, in the event of an intervening transmission from another node of the multidrop bus network after transmission of the data, the reconciliation module may be configured to:
de-assert the sense signal on detection of the intervening transmission; and
keep the sense signal de-asserted until receipt of the further data from the MAC module.

In one or more embodiments, the reconciliation module may be configured to:
re-assert the sense signal on receipt of the further data from the MAC module; and
keep the sense signal asserted until the further data can be transmitted as part of the re-transmission attempt at the next transmit opportunity, at which point the sense signal may be de-asserted by the reconciliation module.

In one or more embodiments, the MAC module may be configured to delay resending of the further data by a wait time after de-assertion of the sense signal, and the reconciliation module may be configured to transmit a filler sequence during the wait time of the MAC module to prevent the next transmit opportunity of the node from timing out.

In one or more embodiments, the time between the transmit opportunity and next transmit opportunity of the node in the absence of intervening transmissions from all other nodes may be equal to or greater than the wait time of the MAC module.

In one or more embodiments, the wait time of the MAC module may be equal to an inter-packet-gap length.

In one or more embodiments, each transmit opportunity may have a duration of no longer than one inter-packet gap length.

In one or more embodiments, the MAC module may require a recovery time following assertion of the collision signal before it can resend the further data as part of the re-transmission attempt, and the reconciliation module may be configured to wait at least the recovery time before de-asserting the sense signal.

In one or more embodiments, the reconciliation module may be configured to determine the recovery time of the MAC module.

In one or more embodiments, the reconciliation module may be configured to determine the recovery time of the MAC module by monitoring timing properties of the MAC module or by obtaining them from a register.

In one or more embodiments, the reconciliation module may be configured to receive a detection signal from the PHY module indicative of activity from other nodes on the multidrop bus network, and de-assert the sense signal when the detection signal indicates that an immediately preceding node in a bus schedule of the multidrop bus network is no longer active or has timed out to enable transmission of the further data as part of a (re-)transmission attempt.

In one or more embodiments, the multidrop bus network may comprise at least three nodes.

In one or more embodiments, the data received from the MAC module may comprise a plurality of data frames within the same sequence for transmission at the transmit opportunity, and the reconciliation module may be configured to insert an active-idle sequence between adjacent data frames to prevent the multidrop bus network from becoming idle before the plurality of data frames have been transmitted.

In one or more embodiments, the reconciliation module may be bufferless.

According to a second aspect of the present disclosure, there is provided a node of a multidrop bus network, the node comprising the reconciliation module of the first aspect, the MAC module and the PHY module.

In one or more embodiments, the multidrop bus network may be an Ethernet network, the MAC module may be an Ethernet CSMA/CD MAC layer and the PHY module may be a 10BASE-T1S PHY layer.

According to a third aspect of the present disclosure, there is provided a multidrop bus network comprising a plurality of the nodes of the second aspect.

According to a fourth aspect of the present disclosure, there is provided a method of collision avoidance for a node of a multidrop bus network, the node comprising a MAC module and a PHY module, the method comprising:
receiving data from the MAC module for transmission on the multidrop bus network via the PHY module at a transmit opportunity of the node;
asserting a sense signal on receipt of the data from the MAC module; and
delaying de-assertion of the sense signal after transmission of the data to facilitate the transmission of further data at the next transmit opportunity of the node.

According to a fifth aspect of the present disclosure, there is provided a computer program comprising computer code configured to control the reconciliation module of the first aspect, control the node of the second aspect, control the multidrop bus network of the third aspect, or perform the method of the fourth aspect.

While the disclosure is amenable to various modifications and alternative forms, specifics thereof have been shown by way of example in the drawings and will be described in detail. It should be understood, however, that other embodiments, beyond the particular embodiments described, are possible as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows the IEEE-standard media-independent interface (MII) between MAC and PHY modules;
Figure 2 shows a reconciliation module between the MAC and PHY modules to avoid bus collisions, wherein both the MAC and PHY modules communicate with the reconciliation module using a MII;
Figure 3 shows a reconciliation module with data buffer between the MAC and PHY modules;
Figure 4 shows transmission attempts by the MAC module of the node of Figure 3 on a fully-loaded bus;
Figure 5 shows transmission attempts by the MAC module of the node of Figure 3 in which a transmit opportunity has timed out;
Figure 6 shows transmission attempts by the MAC module of the node of Figure 3 in which consecutive transmit opportunities have timed out;
Figure 7 shows a reconciliation module without data buffer between the MAC and PHY modules;
Figure 8 shows transmission attempts by the MAC module of the node of Figure 7 on a fully-loaded bus;
Figure 9 shows transmission attempts by the MAC module of the node of Figure 7 in which a transmit opportunity has timed out;
Figure 10 shows transmission attempts by the MAC module of the node of Figure 7 in which consecutive transmit opportunities have timed out;
Figure 11 shows the transmission attempts of Figure 10 with three nodes instead of four;
Figure 12 shows the transmission attempts of Figure 8 in which the sense signal to the MAC module stays de-asserted during transmissions of other nodes if there is no frame pending for re-transmission;
Figure 13 shows the transmission attempts of Figure 9 in which the sense signal to the MAC module stays de-asserted during transmissions of other nodes if there is no frame pending for re-transmission;
Figure 14 shows the transmission attempts of Figure 10 in which the sense signal to the MAC module stays de-asserted during transmissions of other nodes if there is no frame pending for re-transmission;
Figure 15 shows a method of collision avoidance for a node of a multidrop bus network; and
Figure 16 shows a computer-readable medium comprising a computer program configured to control, perform or enable the method of Figure 15.

### Detailed Description

### Ethernet standards

While much of the focus in recent Ethernet development has centred on high data rates, not every application requires speeds of up to 400 Gbps. For some applications, including Internet of Things (IoT), industrial and automotive, 10 Mbps is sufficient for certain functions. Factors like cost, weight, distance and the space required for cables are more important for these use cases.

Recognizing these evolving requirements, IEEE began work in early 2017 to define IEEE 802.3cg, a standard for single-pair Ethernet that supports 10 Mbps. The goals of IEEE 802.3cg were to define a point-to-point and a multidrop short-distance standard with a maximum length of 25 meters, and a long-distance point-to-point standard that supports distances up to 1,000 meters. The resulting IEEE 802.3cg specification includes two link-layer standards: 10BASE-T1S and 10BASE-T1L.

The 10BASE-T1S short-range standard is primarily targeted at automotive and industrial applications. Multiple nodes on the network can share a cable in half-duplex shared-medium mode (multidrop mode) using the standard Ethernet Carrier-Sense Multiple Access with Collision Detection (CSMA/CD) access method or operate using PHY-Level Collision Avoidance (PLCA). The cable might be an unshielded twisted pair (UTP) that may have multiple nodes with their medium dependent interfaces (MDIs) attached thereto. As such, 10BASE-T1S may also be referred to as Multidrop Single Pair Ethernet.

The 10BASE-T1L long-range option is designed for IoT and industrial control applications. The 1,000-meter range is sufficient for use in large factories or warehouses, and 10 Mbps is sufficient for gathering data from sensors and to monitor and control many types of industrial machinery. It shares the advantages of the short network variant: MAC-level compatibility with multipair Ethernet and lower cost, weight and required space.

The following description relates to the 10BASE-T1S standard but may be also applicable to other (including future) networking standards and is therefore not necessarily limited to Ethernet or 10BASE-T1S.

### Technical problem

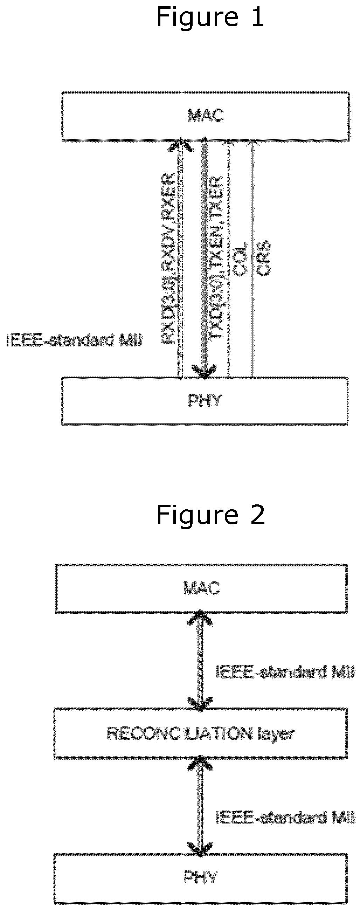

Figure 1 illustrates the carrier-sense multiple access with collision detection (CSMA/CD) media access control (MAC) protocol. CSMA/CD uses carrier-sensing (CRS) to defer transmissions until no other nodes on the network are transmitting. When a collision is detected by the PHY module/layer of a node (CRS=1), it stops transmitting that frame, asserts a collision signal (COL=1) to the MAC module/layer of the node, and waits until the bus is silent before de-asserting the sense signal (CRS=0). The MAC module keeps transmitting for a predefined (jam) time to ensure that all nodes on the bus will observe the collision and then stops transmitting and waits until the sense signal (CRS-M) is de-asserted before trying to resend the frame to the PHY module for re-transmission on the bus. The first re-transmission attempt occurs one IPG time after the sense signal (CRS) is de-asserted again. If that would result in another collision, however, then the MAC module introduces a random variable back-off time from the second re-transmission attempt onwards to avoid indefinitely repeated collisions.

A problem with CSMA/CD is that multiple nodes may attempt to transmit data on the bus simultaneously when the bus is silent. This leads to collisions, corrupted data, time-outs and loss of bus capacity, which in turn can result in severe degradation of effective bus throughput or even a complete collapse as the total bus load gets closer to (e.g. around 70% of) the maximum bus capacity.

Figure 2 shows an example of a collision avoidance mechanism developed to improve bus capacity. This mechanism is known as physical layer collision avoidance (PLCA) and uses a reconciliation module/layer connected between the MAC and PHY modules with respective IEEE-standard media-independent interfaces (MIIs). Each MII may comprise the same set of pins: transmit data (TXD[3:0]), transmit enable (TXEN), transmit error (TXER), receive data (RXD[3:0]), received data valid (RXDV), receive error (RXER), collision detect (COL) and carrier sense (CRS), and furthermore two clock signals (TXCLK and RXCLK, not shown) as defined in IEEE 802.3 Clause 22.

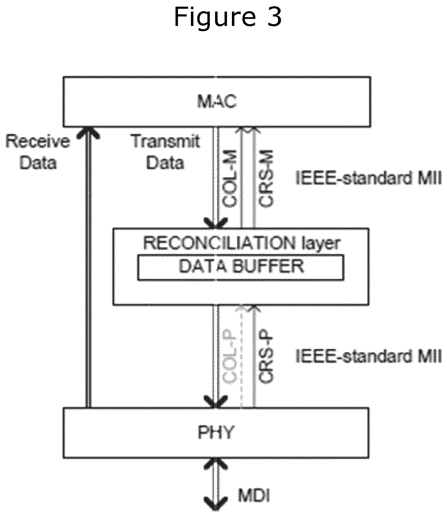

PLCA uses a round-robin scheme in which the nodes are numbered and given the opportunity to transmit one at a time starting at a dedicated time slot (or transmit opportunity TO) in a cyclic manner based on their numbering. One node is assigned as the head node (or PLCA coordinator) and starts each cycle with a beacon. If no data is transmitted by a node at its transmit opportunity, the transmit opportunity is passed to the next node. The reconciliation module knows when the transmit opportunity of its node occurs based on the node number and manages the MAC module using collision (COL-M) and sense (CRS-M) signal manipulations to prevent the MAC module from sending data that cannot be transmitted by the PHY module. In this way, the reconciliation module only passes data to the PHY module when there is a transmit opportunity. The combination of the round-robin scheme with the reconciliation module therefore avoids collisions on the bus. Since there should be no collision events for the PHY module to report, the COL-P pin becomes functionally redundant (and is hence greyed out in Figure 3) but may still be useful for detecting true bus problems.

Figure 3 shows an example of a PLCA mechanism involving a reconciliation module with data buffer (e.g. a first in first out buffer). The data buffer addresses a scenario in which the reconciliation module starts to receive data from the MAC module shortly before a transmit opportunity of the node. In this scenario, the data has been sent from the MAC module too early to be transmitted immediately but too late for the reconciliation module to signal a collision and have the data re-transmitted in time for the upcoming transmit opportunity. The data buffer therefore enables the reconciliation module to temporarily store data sent from the MAC module so that it can be passed to the PHY module for transmission at the upcoming transmit opportunity.

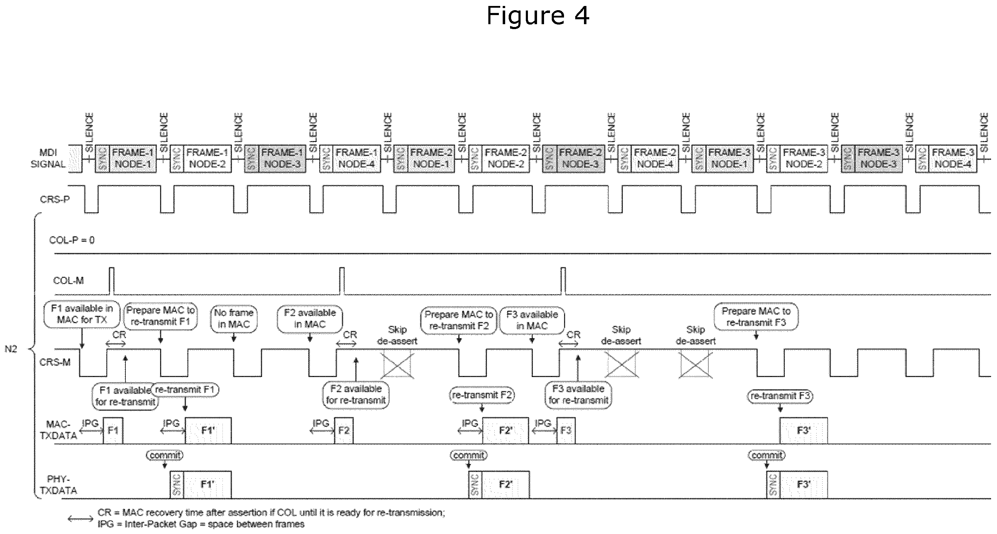

Figure 4 shows transmission attempts (MAC-TXDATA) by the MAC module of a node with the collision avoidance mechanism of Figure 3 on a fully-loaded bus, wherein frames are timely available in the MAC modules of the respective nodes to utilise every transmit opportunity. In this figure, four nodes are transmitting data on the bus with each node transmitting a single data frame at each of its respective transmit opportunities. The numbering of the nodes is provided for illustrative purposes and is non-limiting (e.g. the head node may be numbered "0" in practice). The first transmission attempts of node 2 for data frames 1-3 are respectively denoted F1-F3 and the second (re-)transmission attempts are respectively denoted F1'-F3'.

The reconciliation module receives a detect signal (CRS-P) from the PHY module indicative of transmission activity detected on the bus. The detect signal substantially follows the bus schedule with a slight delay depending on the responsiveness of the PHY module to detect and report the bus activity. The reconciliation module is configured to de-assert the sense signal (CRS-M) each time the detect signal (CRS-P) is de-asserted, unless there has been an earlier transmission attempt by the MAC module for the same frame as described below.

The MAC module is configured to send data to the reconciliation module whenever it has a frame pending for transmission and the sense signal (CRS-M) has been de-asserted by the reconciliation module. To ensure a minimum gap between frames for most Ethernet PHY types, however, the MAC module will delay sending the data to the reconciliation module by a wait time after de-assertion of the sense signal (CRS-M). In this example shown, the wait time of the MAC module is equal to an inter-packet-gap (IPG) length (e.g. 12 bytes). The reconciliation module then re-asserts the sense signal (CRS-M) again on receipt of the data from the MAC module or on detecting activity on the bus via the detect signal (CRS-P). In the examples shown herein, de-assertion of the sense signal (CRS-M) is directly correlated with de-assertion of the detect signal (CRS-P), but re-assertion of the sense signal (CRS-M) is slightly delayed relative to re-assertion of the detect signal (CRS-P). This is intended to help ensure that the MAC module sends the pending data after the wait time even if the transmit opportunities are shorter than 1 IPG, but may not be necessary. As such, re-assertion of the sense signal (CRS-M) could also be directly correlated with re-assertion of the detect signal (CRS-P).

While the sense signal (CRS-M) is de-asserted, the data from the MAC module is buffered in the reconciliation module provided the buffer does not overflow. If a transmission attempt by the MAC module cannot be sufficiently aligned with a transmit opportunity for that node using the buffer, the reconciliation module is configured to assert a collision signal (COL-M) to stop the MAC module from continuing to send the data. This happens by default when another node starts transmitting a data frame on the bus and the detect signal (CRS-P) is asserted. The reconciliation module then de-asserts the collision signal (COL-M). The collision signal (COL-M) need only be asserted long enough to be recognised by the MAC module, and should ideally be as short as possible (e.g. one clock cycle) to avoid any loss of time until recovery.

Following assertion of the collision signal (COL-M) by the reconciliation module, the sense signal (CRS-M) is not immediately de-asserted. This is for two reasons. Firstly, the MAC module requires a recovery time (CR) following assertion of the collision signal before it can resend the data as part of the upcoming transmission attempt. Secondly, it is more efficient for the bus to try and ensure that the re-transmission attempt is synchronised with the upcoming transmit opportunity to avoid any further delays in transmitting the data frame. To achieve this, the sense signal (CRS-M) is kept asserted until the data can be directly transmitted without buffering at the upcoming transmit opportunity and then de-asserted to enable said transmission after the recovery time of the MAC module.

The data frame is then passed by the reconciliation module to the PHY module for transmission (PHY-TXDATA) starting at the upcoming transmit opportunity. It should be mentioned that transmit opportunities can be relatively short (e.g. shorter than the IPG length) and typically do not provide enough time for a node to transmit complete frames. Rather, they provide a time slot or window for the node to claim the bus before the opportunity times out and the next node has the opportunity. A node can claim the bus during a transmit opportunity by starting to transmit a data frame or a filler sequence (SYNC symbols). For example, the reconciliation module may be configured to transmit SYNC symbols on the bus via the PHY module during the wait time of the MAC module. Once the bus has been claimed by the node, it can then proceed to transmit any frame size or even multiple data frames if configured to allow this.

In the example of Figure 4, the upcoming transmit opportunity for frame 1 of node 2 is the next transmit opportunity on the bus schedule following the (virtual) collision. For frames 2 and 3 of node 2, on the other hand, there are intervening transmit opportunities for other nodes on the bus schedule. Since the reconciliation module keeps the sense signal (CRS-M) asserted until the frames can be re-transmitted at the respective upcoming transmit opportunities, the de-assertions of the sense signal (CRS-M) which would otherwise follow the detect signal (CRS-P) from the PHY module are skipped.

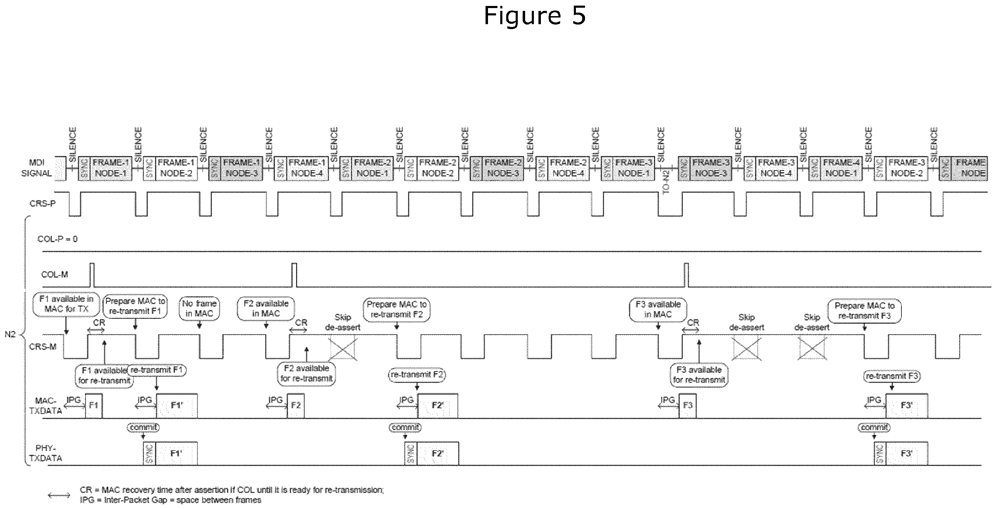

Figure 5 shows further transmission attempts by the MAC module of a node with the collision avoidance mechanism of Figure 3. Unlike the example of Figure 4 in which every transmit opportunity on the bus is used (i.e. a fully-loaded bus), one of the transmit opportunities for node 2 has timed out. This is because frame 3 of node 2 only becomes available in the MAC module sometime during the transmission of frame 3 of node 1. Since the MAC module delays sending data to the reconciliation module by a wait time of one IPG after de-assertion of the sense signal (CRS-M), there is insufficient time to start transmitting frame 3 in the upcoming transmit opportunity for that node if the transmit opportunity ends within roughly 1 IPG length after de-assertion of the sense signal (CRS-M). As such, the reconciliation module asserts the collision (COL-M) and sense (CRS-M) signals and keeps the sense signal (CRS-M) asserted until the next transmit opportunity of the node is detected, at which point it is de-asserted to enable transmission of the frame on the bus. It is important to note here that, although the reconciliation module can temporarily store a limited amount of data in the buffer, the buffer is flushed if any other node transmits data between the transmit opportunities of this node (otherwise a large buffer to store complete frames would be required in the reconciliation module). For this reason, frame 3 could not be stored in the buffer in preparation for the next transmit opportunity of node 2 (hence why the collision signal was asserted and the first transmission attempt aborted).

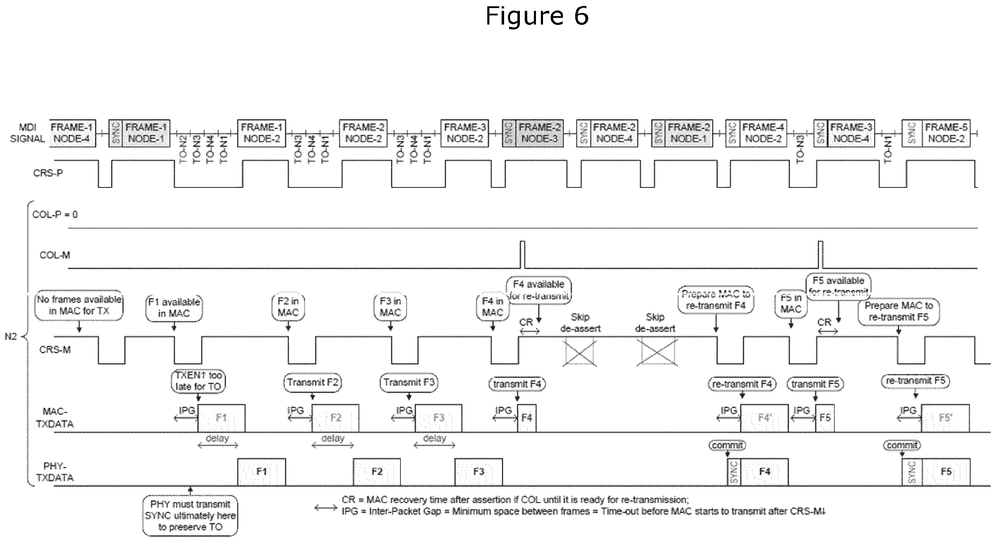

Figure 6 shows further transmission attempts by the MAC module of a node with the collision avoidance mechanism of Figure 3. In this example, consecutive transmit opportunities for nodes 3, 4 and 1 have each timed out such that node 2 is the only node transmitting on the bus for a duration. This is referred to herein as a "boomerang transmit opportunity" for node 2 where the transmit opportunity for this node returns without any intervening transmissions by other nodes.

As shown in the figure, the MAC module of node 2 attempts to transmit frame 1 an IPG length after the sense signal (CRS-M) is de-asserted following transmission of the first frame by node 1. Since this is too late for transmission at the upcoming transmit opportunity of node 2, the reconciliation module temporarily stores frame 1 in the buffer until the next transmit opportunity arrives, at which point it is transmitted on the bus by the PHY module. This is only possible because there are no intervening transmissions by other nodes, otherwise the buffer would have been flushed and a collision signal asserted (as per the example in Figure 5). The result is the transmission of frames 1-3 by node 2 being delayed by the buffer until the respective transmit opportunities of that node without the need for any re-transmission attempts by the MAC module. In contrast, collision signals (COL-M) are asserted for frames 4 and 5 because they are received from the MAC module while there are intervening transmissions by other nodes. These frames are therefore re-transmitted at the next transmit opportunity similar to the previous examples.

Although the PLCA mechanism successfully avoids collisions on the bus by blocking transmission outside of the scheduled transmit opportunities for the node, the use of a data buffer in the reconciliation module complicates the system and loses its benefit when the MAC module tries to send more data - before it can be transmitted on the bus - than the buffer can temporarily store or when any other node transmits a frame. Furthermore, the time-period during which it is too early to transmit the data from the MAC module and yet too late for re-transmission after a virtual collision is relatively short in relation to the total bus cycle time. In view of the above, it can be difficult to justify the additional cost and complexity associated with the data buffer.

### Embodiments of the present disclosure

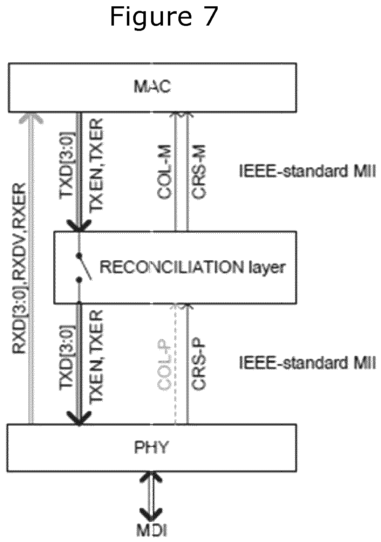

Figure 7 shows an example of a collision avoidance mechanism involving a reconciliation module (or layer) which avoids collisions on the bus without requiring a data buffer. As in the previous examples, the reconciliation module is configured to receive data sent from the MAC module (or layer) for transmission on the multidrop bus network via the PHY module (or layer) at a transmit opportunity of the node. The MAC module is configured to send data to the reconciliation module whenever it has a frame pending for transmission, the sense signal (CRS-M) has been de-asserted by the reconciliation module, and the wait time has passed following de-assertion of the sense signal (CRS-M).

Also, in the event that the data is received from the MAC module while not being able to transmit it via the PHY module, the reconciliation module is configured to assert a collision signal (COL-M), keep the sense signal (CRS-M) asserted until the data can be transmitted at the upcoming transmit opportunity, and then de-assert the sense signal (CRS-M) at the upcoming transmit opportunity to enable said transmission.

A key difference from the earlier collision avoidance mechanism, however, occurs when intervening transmissions from the other nodes of the multidrop bus network preceding the next transmit opportunity of the node are skipped (i.e. timed-out). Note that the reconciliation module is not required to de-assert the sense signal (CRS-M) immediately when the detect signal (CRS-P) from the PHY module is de-asserted for first transmission attempts. With this collision avoidance mechanism, the reconciliation module is configured to delay de-assertion of the sense signal (CRS-M) after transmission of the data to facilitate the transmission of further data at the next transmit opportunity of the node.

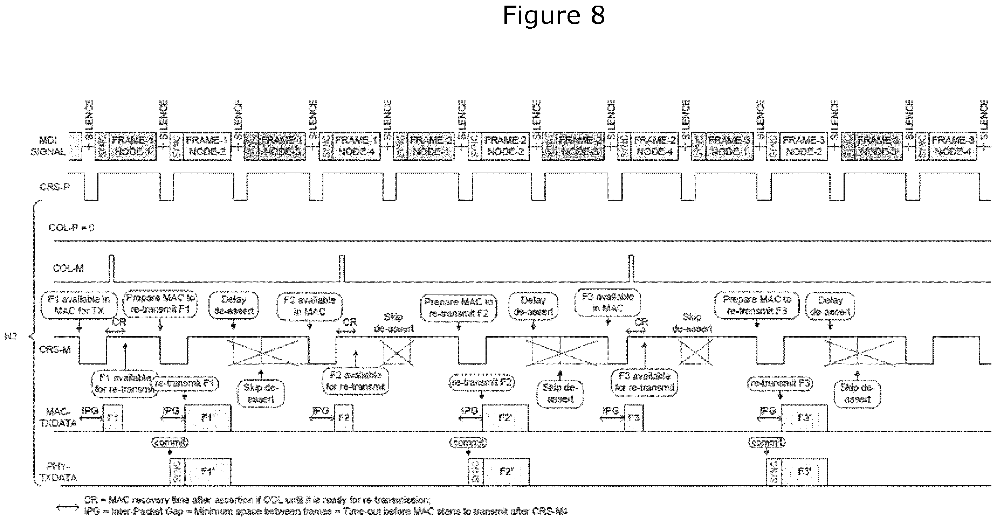

Figure 8 shows transmission attempts (MAC-TXDATA) by the MAC module of a node (node 2 in this example), and the associated data transmission (PHY-TXDATA) by the PHY module of the node, with the collision avoidance mechanism of Figure 7 on a fully-loaded bus for comparison with Figure 4. Although the bus schedule is shown with a fixed bus cycle time and fixed frame lengths for the nodes, this is merely an example and is not necessary. In this figure, the wait time of each MAC module is equal to one IPG length.

As shown in Figure 8, de-assertion of the sense signal (CRS-M) is deliberately delayed following the transmission of frame 1 of node 2. However, since node 3 uses its first transmit opportunity to transmit its first frame of data, the sense signal (CRS-M) follows the detect signal (CRS-P) and is de-asserted immediately after the transmission of frame 1 of node 3. This results in the MAC module sending frame 2 for transmission one IPG length later, thereby causing the reconciliation module to assert a collision signal (COL-M) and re-transmit the frame at the next transmit opportunity (similar to Figure 4). The procedure is then repeated for frames 2 and 3 of node 2.

When compared to the example of Figure 4 in which the reconciliation module has the data buffer, the transmit attempts by the MAC module (MAC-TXDATA) of node 2 and the resulting transmissions on the bus (PHY-TXDATA) are unchanged. This illustrates that delaying de-assertion of the sense signal (CRS-M) after transmission of a frame has no impact on the bus when all other nodes are utilising their transmit opportunities.

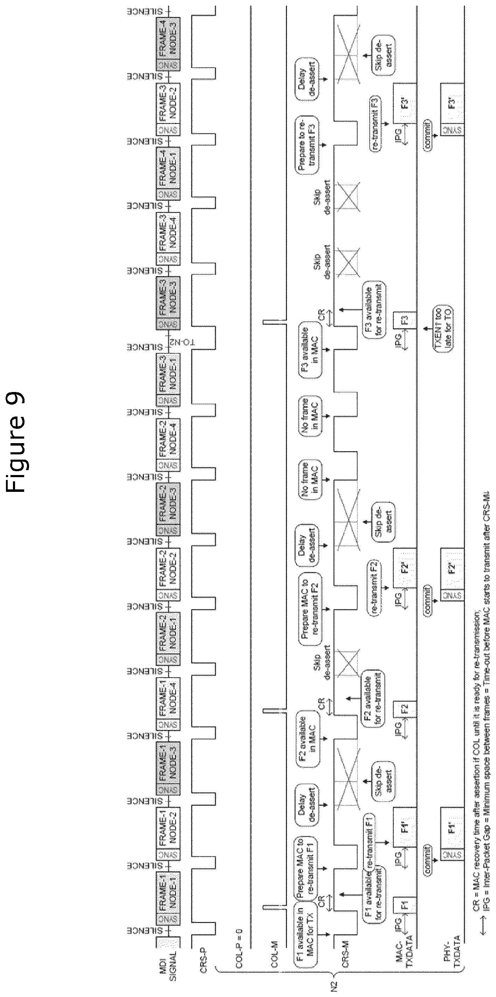

Figure 9 shows transmission attempts by the MAC module of node 2 with the collision avoidance mechanism of Figure 7 for comparison with Figure 5. Like the example of Figure 5, the transmit opportunity for frame 3 of node 2 times out because this frame arrives too late for transmission at the upcoming transmit opportunity. Also, similar to the behaviour shown in Figure 8, the intervening transmissions by nodes 3, 4 and 1 mean that the delayed de-assertion of the sense signal (CRS-M) following the transmission of frames 1 and 2 of node 2 do not affect the bus.

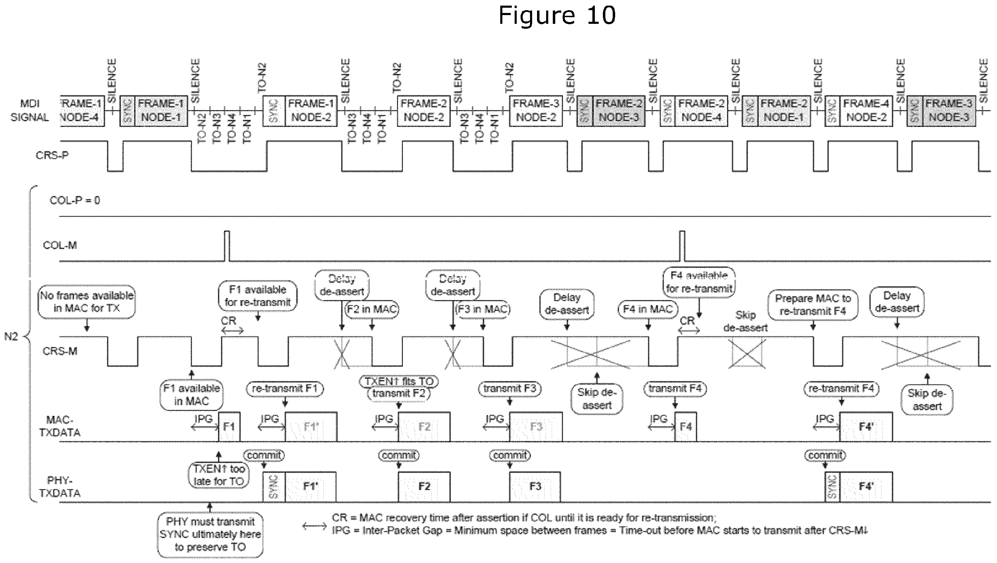

Figure 10 shows further transmission attempts by the MAC module of node 2 with the collision avoidance mechanism of Figure 7 for comparison with Figure 6. Again, consecutive transmit opportunities for nodes 3, 4 and 1 have each timed out such that node 2 is the only node transmitting on the bus for a duration (i.e. boomerang transmit opportunities). This time, however, instead of the reconciliation module buffering frame 1 which is received too late from the MAC module for transmission at the upcoming transmit opportunity, it asserts a collision signal (COL-M) to abort the transmission and controls the sense signal (CRS-M) to cause re-transmission of the frame at the next transmit opportunity.

De-assertion of the sense signal (CRS-M) is then delayed after the transmission of frame 1 until one IPG length in advance of the next transmit opportunity of the node. As such, the reconciliation module receives frame 2 immediately after the wait time of the MAC module, which is then passed to the PHY module for transmission on the bus at the next transmit opportunity. This is repeated for frame 3 of node 2. It is also worth noting here that, since frames 2 and 3 are transmitted on the first transmit attempt, the reconciliation module does not claim the bus by sending additional SYNC symbols to the PHY module as it did for the re-transmission of frame 1 (every transmission starts with at least 2 SYNC symbols as part of the standardized format). The use of additional SYNC symbols in this way only occurs for re-transmissions because the reconciliation module knows for sure that a frame is coming from the MAC module and the bus needs to be claimed to utilise the transmit opportunity.

Although the sense signal (CRS-M) is also delayed following the transmission of frame 3 by node 2, the intervening transmission of frame 2 by node 3 causes the sense signal (CRS-M) to follow the detect signal (CRS-P) received from the PHY module. As a result, the sense signal (CRS-M) is de-asserted immediately after the intervening transmission. Since frame 4 of node 2 is available in the MAC module at this point, it is then sent to the reconciliation module after the (one IPG) wait time of the MAC module which triggers a virtual collision (COL-M) and re-transmission of the frame at the upcoming transmit opportunity.

As shown with frames 2 and 3 of node 2 in Figure 10, delaying de-assertion of the sense signal (CRS-M) after transmission of a frame at one transmit opportunity of the node can enable the transmission of a subsequent frame at the next transmit opportunity without buffering, additional SYNC symbols or the need to abort (using COL-M) and re-transmit the subsequent frame. As described, this only occurs if the other nodes skip their transmit opportunities preceding the next transmit opportunity of the node.

Since no collision signal (COL-M) is asserted by the reconciliation module in this scenario, there is no need to fit the recovery time (CR) of the MAC module between adjacent transmit opportunities of the node. As such, the minimum required time between adjacent transmit opportunities of one node is the wait time of the MAC module following de-assertion of the sense signal (CRS-M), which in the illustrated example is only one IPG length.

The minimum time requirement also dictates the minimum number of nodes needed for this collision avoidance mechanism to provide benefit. The duration of a transmit opportunity is a variable to be set by the system integrator and depends on several parameters. In practice, however, it is likely to be around 0.5 IPG lengths. In the example of Figure 10, there are four nodes on the multidrop bus network with three intervening nodes (nodes 3, 4 and 1) skipping their respective transmit opportunities between the transmission of frames 1, 2 and 3 of node 2. Assuming the transmit opportunity of each node is 0.5 IPG lengths, this provides a duration of 1.5 IPG lengths for a boomerang transmit opportunity of node 2, which satisfies the one IPG length wait time of the MAC module.

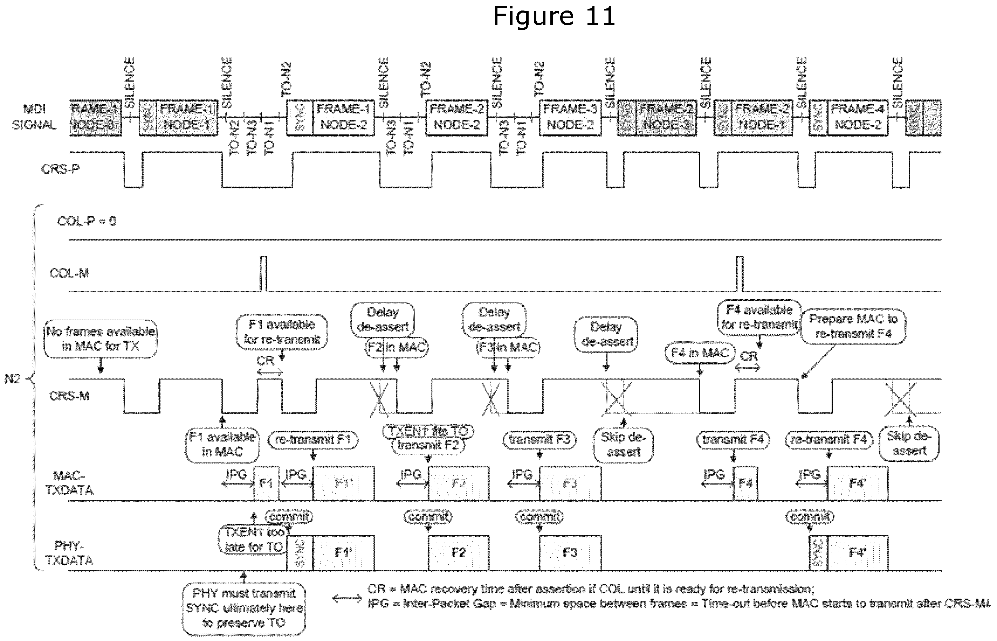

Figure 11 shows a similar scenario to Figure 10 but with three nodes (nodes 1-3) on the multidrop bus network instead of four. This example illustrates that delaying de-assertion of the sense signal (CRS-M) after transmission of a frame until a wait time of the MAC module in advance of the next transmit opportunity of the node still enables transmission of a subsequent frame without buffering, virtual collision (COL-M) or additional SYNC symbols, even with only two intervening skipped transmission opportunities. This is because a transmit opportunity of 0.5 IPG lengths provides a duration of one IPG length between adjacent transmit opportunities of node 2 when nodes 3 and 1 are silent, which is the minimum duration required to satisfy the wait time of this particular MAC module. Note that even if a collision has been indicated, the reconciliation module may anyway be configured to claim the bus at the upcoming transmit opportunity and send SYNC symbols until the MAC module is ready to re-transmit. This is possible because the reconciliation module knows that a frame is pending once it has asserted the collision signal (COL-M).

The collision avoidance mechanism of Figure 7 can even be further extended. In the examples shown in Figures 10 and 11, all intervening transmit opportunities of the other nodes are skipped between the transmission of frames 1, 2 and 3 of node 2, thereby providing a boomerang transmit opportunity for this node. However, a boomerang transmit opportunity is not essential, and the delayed de-assertion of the sense signal (CRS-M) can be applied as long as one or more preceding transmit opportunities of the other nodes are skipped (the required number will depend on the length of the transmit opportunities), even if there is an intervening transmission from another node. For example, if node 3 in Figure 10 used its transmit opportunity between the transmission of frames 1 and 2 of node 2, but nodes 4 and 1 did not, there would still be one IPG length until the next transmit opportunity of node 2 assuming a transmit opportunity duration of 0.5 IPG lengths. This was sufficient to satisfy the wait time of the MAC module in Figure 11. In this situation, the reconciliation module may be configured to delay de-assertion of the sense signal (CRS-M) after the intervening transmission (frame 2 of node 3 in this example) until the predefined wait time in advance of the next transmit opportunity.

Rather than delaying de-assertion of the sense signal (CRS-M) in the event of an intervening transmission (i.e. no boomerang transmit opportunity), the reconciliation module may instead be configured to de-assert the sense signal (CRS-M) on detection of the intervening transmission and keep it de-asserted until the receipt of further data from the MAC module.

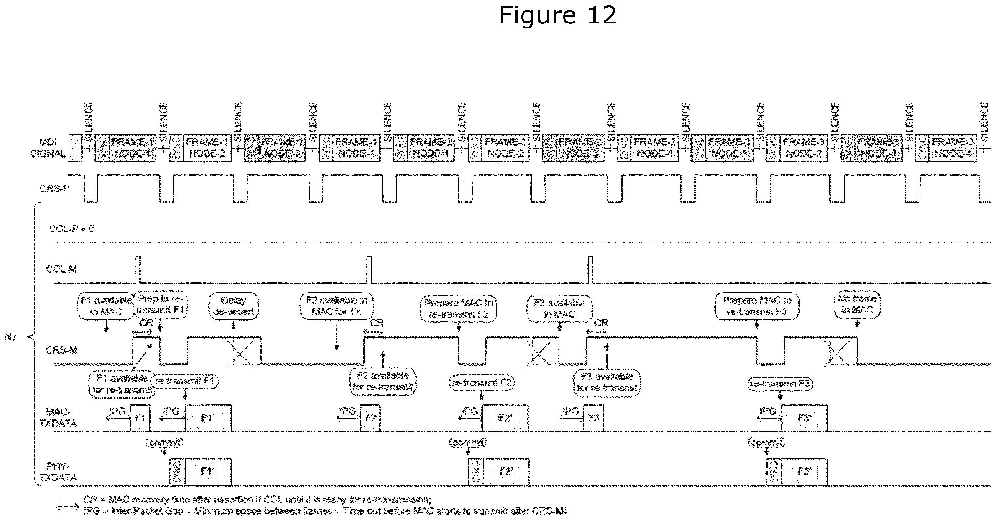

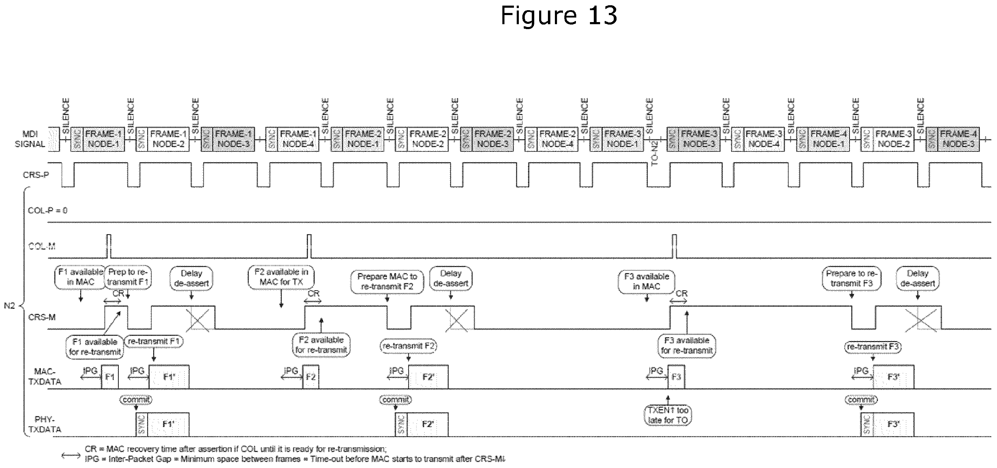

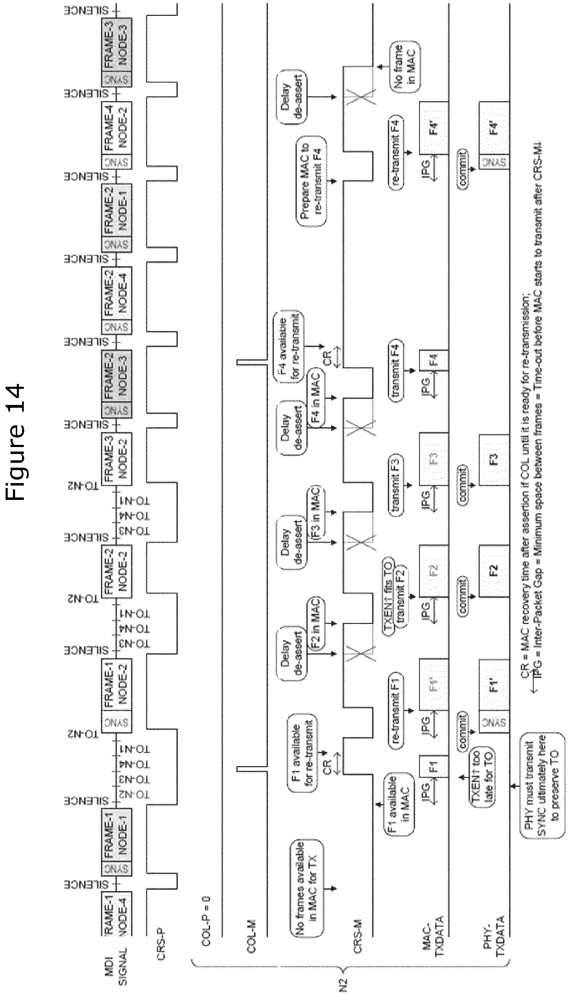

Figures 12-14 illustrate this alternative approach for direct comparison with Figures 8-10, respectively. Assertion of the sense signal (CRS-M) whenever another node is transmitting on the bus blocks the first transmission attempt of a data frame by the MAC module which was not available when the sense signal (CRS-M) was de-asserted. Keeping the sense signal (CRS-M) de-asserted as much as possible, however, means that the MAC module can initiate a first transmission attempt for the next frame whenever the data becomes available (albeit following the wait time) without being blocked by the transmissions of other nodes. That said, the assertion and de-assertion of the sense signal (CRS-M) following a virtual collision is unaffected and follows the behaviour described earlier to enable transmission of the data frame on the second transmission attempt.

Although the illustrated examples show each transmit opportunity limited to the transmission of a single data frame, it is also possible for a node to transmit a plurality of data frames within a single sequence starting at one transmit opportunity. To allow for this, the reconciliation module may be configured to insert an active-idle sequence between adjacent data frames of the sequence to prevent the bus from becoming idle before the plurality of data frames have been transmitted. Note that in this scenario, the sense signal to the MAC module is de-asserted after every frame while the signal driven on the bus is active-idle. This is done to ensure that the MAC module keeps sending frames up to a predefined maximum number of frames in a burst. Once the maximum number is reached, any further frame will be blocked by a indicating a collision to the MAC module with re-transmission at the next transmit opportunity. If the MAC module has less than the maximum allowed number of frames available to send as a burst, the transmission will time out and stop driving active-idle.

Each node of the multidrop bus network described herein may comprise a MAC module, a PHY module and a reconciliation module. The multidrop bus network may be an Ethernet network, the MAC module may be an Ethernet CSMA/CD MAC layer and the PHY module may be a 10BASE-T1S PHY layer. Furthermore, given that the reconciliation module described in relation to Figure 7 does not require a data buffer, the reconciliation module may be bufferless. Even in "bufferless" examples without a data buffer for storing the first part of a frame until the next transmit opportunity, the reconciliation module may still comprise a small buffer of a few bits in size to facilitate parsing of data between layers/modules of the Ethernet protocol. Nevertheless, the associated collision avoidance mechanism is still applicable even if the reconciliation module comprises a data buffer (e.g. as shown in Figure 3). As mentioned previously, one possible advantage of maintaining a data buffer in the reconciliation module is that the cut-off point for deciding whether to re-transmit the data from the MAC module at the first upcoming transmit opportunity, or whether to defer the re-transmission until the second upcoming transmit opportunity, can be closer to the start of the first upcoming transmit opportunity if the buffered data is immediately available for passing to the PHY module.

It should be noted here that the head node of a 10BASE-T1S bus with PLCA transmits beacons to indicate the start of a new bus cycle. This also allows other nodes to synchronize and detect how many nodes are present on the bus (node count before cycle restart). Beacons have not been included in the diagrams for simplicity reasons, but their presence does not preclude the applicability of the ideas/concepts described herein. Nevertheless, the beacon should not be considered as an intervening data transmission, and the de-assertion moment of the boomerang transmit opportunity should take the time duration of the beacon into account.

Although the reconciliation module (or layer) has been described herein with reference to the MAC and PHY modules (or layers), it could be formed independently of the other modules and incorporated into the node during a subsequent modular assembly process. In some cases, the reconciliation module may even be retrofit to an existing node. Alternatively, the reconciliation module may be integrated with the other modules of the node at the time of manufacture (e.g. as different parts/portions of the same chip). One or more (or each) module may comprise circuitry including at least one processor and at least one memory including computer program code. The at least one memory and computer program code may be configured to, with the at least one processor, cause the module to perform the associated functionality described herein.

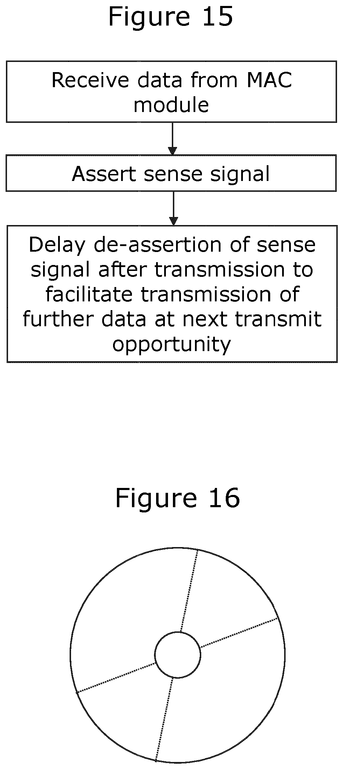

Figure 15 illustrates schematically the main steps of a method of collision avoidance for a node of a multidrop bus network. As shown, the method comprises:
receiving data from the MAC module for transmission on the multidrop bus network via the PHY module at a transmit opportunity of the node;
asserting a sense signal on receipt of the data from the MAC module; and
delaying de-assertion of the sense signal after transmission of the data to facilitate the transmission of further data at the next transmit opportunity of the node.

Figure 16 illustrates schematically a computer/processor readable medium providing a computer program according to one example. The computer program may comprise computer code configured to perform, control or enable one or more of the method steps of Figure 15 using a reconciliation module described herein. In this example, the computer/processor readable medium is a disc such as a digital versatile disc (DVD) or a compact disc (CD). In other embodiments, the computer/processor readable medium may be any medium that has been programmed in such a way as to carry out an inventive function. The computer/processor readable medium may be a removable memory device such as a memory stick or memory card (SD, mini SD, micro SD or nano SD) or an embedded or external non-volatile memory (e.g. flash or MRAM).

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A reconciliation module for a node of a multidrop bus network, the node comprising a MAC module and a PHY module, the reconciliation module comprising circuitry configured to:
receive data from the MAC module for transmission on the multidrop bus network via the PHY module at a transmit opportunity of the node;
assert a sense signal on receipt of the data from the MAC module; and
**characterized in that** the circuitry is configured to delay de-assertion of the sense signal after transmission of the data to facilitate the transmission of further data at the next transmit opportunity of the node.

2. The reconciliation module of claim 1, wherein the reconciliation module is configured to delay de-assertion of the sense signal until a predefined wait time of the MAC module in advance of the next transmit opportunity of the node in the absence of intervening transmissions from the other nodes of the multidrop bus network.

3. The reconciliation module of claim 1, wherein, in the event of an intervening transmission from another node of the multidrop bus network after transmission of the data, the reconciliation module is configured to delay de-assertion of the sense signal after the intervening transmission until the predefined wait time in advance of the next transmit opportunity.

4. The reconciliation module of claim 1, wherein, in the event of an intervening transmission from another node of the multidrop bus network after transmission of the data, the reconciliation module is configured to:
de-assert the sense signal;
receive the further data from the MAC module;
assert a collision signal on receipt of the further data from the MAC module to stop the MAC module from continuing to send the further data; and
control the sense signal to cause the MAC module to resend the further data as part of a re-transmission attempt such that the further data is transmitted at the next transmit opportunity of the node.

5. The reconciliation module of claim 4, wherein, in the event of an intervening transmission from another node of the multidrop bus network after transmission of the data, the reconciliation module is configured to:
de-assert the sense signal on detection of the intervening transmission; and
keep the sense signal de-asserted until receipt of the further data from the MAC module.

6. The reconciliation module of claim 4 or 5, wherein the reconciliation module is configured to:
assert the sense signal on receipt of the further data from the MAC module; and
keep the sense signal asserted until the further data can be transmitted as part of the re-transmission attempt at the next transmit opportunity, at which point the sense signal is de-asserted by the reconciliation module.

7. The reconciliation module of claim 2, wherein the wait time of the MAC module is equal to an inter-packet-gap length.

8. The reconciliation module of any preceding claim, wherein the multidrop bus network comprises at least three nodes.

9. The reconciliation module of any preceding claim, wherein the data received from the MAC module comprises a plurality of data frames within the same sequence for transmission at the transmit opportunity, and wherein the reconciliation module is configured to insert an active-idle sequence between adjacent data frames to prevent the multidrop bus network from becoming idle before the plurality of data frames have been transmitted.

10. The reconciliation module of any preceding claim, wherein the reconciliation module is bufferless.

11. A node of a multidrop bus network, the node comprising the reconciliation module of any preceding claim, the MAC module and the PHY module.

12. The node of claim 11, wherein the multidrop bus network is an Ethernet network, the MAC module is an Ethernet CSMA/CD MAC layer and the PHY module is a 10BASE-T1S PHY layer.

13. A multidrop bus network comprising a plurality of nodes as defined in claim 11 or 12.

14. A method of collision avoidance for a node of a multidrop bus network, the node comprising a MAC module and a PHY module, the method comprising:
receiving data from the MAC module for transmission on the multidrop bus network via the PHY module at a transmit opportunity of the node;
asserting a sense signal on receipt of the data from the MAC module; and
**characterized by** delaying de-assertion of the sense signal after transmission of the data to facilitate the transmission of further data at the next transmit opportunity of the node.

15. A computer program comprising computer code configured to perform the steps of the method of claim 14.

## Patentansprüche

1. Abstimmungsmodul für einen Knoten eines Multidrop-Busnetzwerks, wobei der Knoten ein MAC-Modul und ein PHY-Modul umfasst, wobei das Abstimmungsmodul eine Schaltung umfasst, die für Folgendes ausgebildet ist:
Empfangen von Daten von dem MAC-Modul zur Übertragung auf dem Multidrop-Busnetzwerk über das PHY-Modul bei einer Übertragungsgelegenheit des Knotens;
Aktivieren eines Erfassungssignals beim Empfang der Daten vom MAC-Modul; und
**dadurch gekennzeichnet, dass** die Schaltung dazu ausgebildet ist, die Deaktivierung des Erfassungssignals nach der Übertragung der Daten zu verzögern, um die Übertragung weiterer Daten bei der nächsten Übertragungsgelegenheit des Knotens zu erleichtern.

2. Abstimmungsmodul nach Anspruch 1, wobei das Abstimmungsmodul dazu ausgebildet ist, die Deaktivierung des Erfassungssignals bis zu einer vordefinierten Wartezeit des MAC-Moduls vor der nächsten Übertragungsgelegenheit des Knotens in Abwesenheit von dazwischenliegenden Übertragungen von den anderen Knoten des Multidrop-Busnetzwerks zu verzögern.

3. Abstimmungsmodul nach Anspruch 1, wobei das Abstimmungsmodul für den Fall einer dazwischenliegenden Übertragung von einem anderen Knoten des Multidrop-Busnetzwerks nach der Übertragung der Daten dazu ausgebildet ist, die Deaktivierung des Erfassungssignals nach der dazwischenliegenden Übertragung bis zu der vordefinierten Wartezeit vor der nächsten Übertragungsgelegenheit zu verzögern.

4. Abstimmungsmodul nach Anspruch 1, wobei das Abstimmungsmodul für den Fall einer dazwischenliegenden Übertragung von einem anderen Knoten des Multidrop-Busnetzwerks nach der Übertragung der Daten für Folgendes ausgebildet ist:
Deaktivieren des Erfassungssignals;
Empfangen der weiteren Daten von dem MAC-Modul;
Aktivieren eines Kollisionssignals beim Empfang der weiteren Daten von dem MAC-Modul, um das MAC-Modul daran zu hindern, die weiteren Daten weiter zu senden; und
Steuern des Erfassungssignals, um zu bewirken, dass das MAC-Modul die weiteren Daten im Rahmen eines erneuten Übertragungsversuchs erneut sendet, so dass die weiteren Daten bei der nächsten Übertragungsgelegenheit des Knotens übertragen werden.

5. Abstimmungsmodul nach Anspruch 4, wobei das Abstimmungsmodul für den Fall einer dazwischenliegenden Übertragung von einem anderen Knoten des Multidrop-Busnetzwerks nach der Übertragung der Daten für Folgendes ausgebildet ist:
Deaktivieren des Erfassungssignals bei Detektion der dazwischenliegenden Übertragung; und
Halten des Erfassungssignals bis zum Empfang der weiteren Daten vom MAC-Modul deaktiviert.

6. Abstimmungsmodul nach Anspruch 4 oder 5, wobei das Abstimmungsmodul für Folgendes ausgebildet ist:
Aktivieren des Erfassungssignals beim Empfang der weiteren Daten vom MAC-Modul; und
Halten des Erfassungssignals solange geltend, bis die weiteren Daten im Rahmen des Wiederübertragungsversuchs bei der nächsten Übertragungsgelegenheit übertragen werden können, wobei das Erfassungssignal von dem Abstimmungsmodul deaktiviert wird.

7. Abstimmungsmodul nach Anspruch 2, wobei die Wartezeit des MAC-Moduls gleich einer Interpacket-Gap-Länge ist.

8. Abstimmungsmodul nach einem der vorhergehenden Ansprüche, wobei das Multidrop-Busnetzwerk mindestens drei Knoten umfasst.

9. Abstimmungsmodul nach einem der vorhergehenden Ansprüche, wobei die von dem MAC-Modul empfangenen Daten eine Vielzahl von Datenframes innerhalb derselben Sequenz zur Übertragung bei der Übertragungsgelegenheit umfassen und wobei das Abstimmungsmodul dazu ausgebildet ist, eine Aktiv-Leerlauf-Sequenz zwischen benachbarten Datenframes einzufügen, um zu verhindern, dass das Multidrop-Busnetzwerk inaktiv wird, bevor die Vielzahl von Datenframes übertragen wurden.

10. Abstimmungsmodul nach einem der vorhergehenden Ansprüche, wobei das Abstimmungsmodul pufferlos ist.

11. Knoten eines Multidrop-Busnetzwerks, wobei der Knoten das Abstimmungsmodul nach einem der vorhergehenden Ansprüche, das MAC-Modul und das PHY-Modul umfasst.

12. Knoten nach Anspruch 11, wobei das Multidrop-Busnetzwerk ein Ethernet-Netzwerk ist, das MAC-Modul eine Ethernet-CSMA/CD-MAC-Schicht ist und das PHY-Modul eine 10BASE-T1S-PHY-Schicht ist.

13. Multidrop-Busnetzwerk, das eine Vielzahl von Knoten nach Anspruch 11 oder 12 umfasst.

14. Verfahren zur Kollisionsvermeidung für einen Knoten eines Multidrop-Busnetzwerks, wobei der Knoten ein MAC-Modul und ein PHY-Modul umfasst, wobei das Verfahren Folgendes umfasst:
Empfangen von Daten von dem MAC-Modul zur Übertragung auf dem Multidrop-Busnetzwerk über das PHY-Modul bei einer Übertragungsgelegenheit des Knotens;
Aktivieren eines Erfassungssignals beim Empfang der Daten von dem MAC-Modul; und
**gekennzeichnet durch** Verzögern der Deaktivierung des Erfassungssignals nach der Übertragung der Daten, um die Übertragung weiterer Daten bei der nächsten Übertragungsgelegenheit des Knotens zu erleichtern.

15. Computerprogramm, das einen Computercode umfasst, der dazu ausgebildet ist, die Schritte des Verfahrens nach Anspruch 14 durchzuführen.

## Revendications

1. Module de réconciliation pour un nœud d'un réseau de bus multipoint, le nœud comprenant un module MAC et un module PHY, le module de réconciliation comprenant des circuits configurés pour :
recevoir des données du module MAC pour émission sur le réseau de bus multipoint par l'intermédiaire du module PHY lors d'une opportunité d'émission du nœud ;
activer un signal de détection à la réception des données provenant du module MAC ; et
**caractérisé en ce que** les circuits sont configurés pour retarder l'activation du signal de détection après l'émission des données afin de faciliter l'émission d'autres données à la prochaine opportunité d'émission du nœud.

2. Module de réconciliation selon la revendication 1, le module de réconciliation étant configuré pour retarder l'activation du signal de détection jusqu'à un temps d'attente prédéfini du module MAC avant l'opportunité d'émission suivante du nœud en l'absence d'émissions intercalées provenant des autres nœuds du réseau de bus multipoint.

3. Module de réconciliation selon la revendication 1, dans lequel, dans le cas d'une émission intercalée provenant d'un autre nœud du réseau de bus multipoint après l'émission des données, le module de réconciliation est configuré pour retarder la désactivation du signal de détection après l'émission intercalée jusqu'au temps d'attente prédéfini avant la prochaine opportunité d'émission.

4. Module de réconciliation selon la revendication 1, dans lequel, dans le cas d'une émission intercalée en provenance d'un autre nœud du réseau de bus multipoint après l'émission des données, le module de réconciliation est configuré pour :
désactiver le signal de détection ;
recevoir les autres données du module MAC ;
activer un signal de collision à la réception des autres données du module MAC pour empêcher le module MAC de continuer à envoyer les autres données ; et
commander le signal de détection pour amener le module MAC à renvoyer les autres données dans le cadre d'une tentative de réémission de sorte que les autres données soient émises à la prochaine opportunité d'émission du nœud.

5. Module de réconciliation selon la revendication 4, dans lequel, dans le cas d'une émission intercalée en provenance d'un autre nœud du réseau de bus multipoint après l'émission des données, le module de réconciliation est configuré pour :
désactiver le signal de détection lors de la détection de l'émission intercalée ; et
maintenir le signal de détection désactivé jusqu'à la réception des autres données du module MAC.

6. Module de réconciliation selon la revendication 4 ou la revendication 5, le module de réconciliation étant configuré pour :
activer le signal de détection à la réception des autres données du module MAC ; et
maintenir le signal de détection activé jusqu'à ce que les autres données puissent être émises dans le cadre de la tentative de réémission à la prochaine opportunité d'émission, où le signal de détection est désactivé par le module de réconciliation.

7. Module de réconciliation selon la revendication 2, dans lequel le temps d'attente du module MAC est égal à une longueur d'intervalle entre paquets.

8. Module de réconciliation selon l'une quelconque des revendications précédentes, dans lequel le réseau de bus multipoint comprend au moins trois nœuds.

9. Module de réconciliation selon l'une quelconque des revendications précédentes, dans lequel les données reçues du module MAC comprennent une pluralité de trames de données dans la même séquence pour émission lors de l'opportunité d'émission, et où le module de réconciliation est configuré pour insérer une séquence active-inactive entre des trames de données adjacentes pour empêcher le réseau de bus multipoint de devenir inactif avant que la pluralité de trames de données aient été émises.

10. Module de réconciliation selon l'une quelconque des revendications précédentes, dans lequel le module de réconciliation est sans mémoire tampon.

11. Nœud d'un réseau de bus multipoint, le nœud comprenant le module de réconciliation selon l'une quelconque des revendications précédentes, le module MAC et le module PHY.

12. Nœud selon la revendication 11, dans lequel le réseau de bus multipoint est un réseau Ethernet, le module MAC est une couche MAC Ethernet CSMA/CD et le module PHY est une couche PHY 10BASE-T1S.

13. Réseau de bus multipoint comprenant une pluralité de nœuds tels que définis dans la revendication 11 ou la revendication 12.

14. Procédé d'évitement de collision pour un nœud d'un réseau de bus multipoint, le nœud comprenant un module MAC et un module PHY, le procédé comprenant les étapes suivantes :
recevoir des données du module MAC pour émission sur le réseau de bus multipoint par l'intermédiaire du module PHY lors d'une opportunité d'émission du nœud ;
activer un signal de détection à la réception des données provenant du module MAC ; et
**caractérisé par** le retard de la désactivation du signal de détection après l'émission des données afin de faciliter l'émission d'autres données à la prochaine opportunité d'émission du nœud.

15. Programme informatique comprenant un code informatique configuré pour exécuter les étapes du procédé selon la revendication 14.
